# EUROPÄISCHE PATENTSCHRIFT

(11) **EP 0 583 664 B1**
(45) Veröffentlichungstag und Bekanntmachung des Hinweises auf die Patenterteilung: **31.01.1996**
(21) Anmeldenummer: 93112148.7
(22) Anmeldetag: 29.07.1993
(51) Int. Cl.: B60S 1/52, B05B 1/10

(54) **Spritzdüse für Scheibenwaschanlagen**
Nozzle for windscreen washer apparatus
Buse pour un appareil de lave-glaces

(30) Priorität: 18.08.1992 DE 4227289
(43) Veröffentlichungstag der Anmeldung: 23.02.1994
(73) Patentinhaber: ROBERT BOSCH GMBH, D-70442 Stuttgart (DE)
(72) Erfinder: Keuper, Gerhard, Dr.-Ing., D-71229 Leonberg (DE)

(56) Entgegenhaltungen:
- WO-A-80/00543
- DE-A- 2 313 980
- DE-A- 2 654 227
- US-A- 4 157 161

## Beschreibung

### Stand der Technik

Die Erfindung geht aus von einer Spritzdüse für Scheibenwaschanlagen von Fahrzeugen der im Oberbegriff des Anspruchs 1 definierten Gattung.

Bei einer bekannten Spritzdüse dieser Art (DE 23 13 980 A1) ist die Druckkammer als kreisförmige Wirbelkammer ausgebildet, in welcher der Druckwasserzulauf tangential mündet. Die Achse der Spritzöffnung verläuft senkrecht zu der Ebene, in welcher das Waschwasser umläuft. Die Spritzöffnung hat einen großen Querschnitt, der dadurch verringert wird, daß in ihr ein im wesentlichen quer zur Spritzöffnungsachse bewegbar angeordnetes Glied vorgesehen ist. Dieses an einem Federdraht gehaltene Glied liegt in Ruhestellung etwa konzentrisch in der Spritzöffnung, so daß ein ringförmiger Spritzquerschnitt entsteht. Im Betrieb wird das Glied durch das in der Wirbelkammer verwirbelte Waschwasser in Schwingungen versetzt und läuft am Rande der Spritzöffnung um, so daß der aus der Spritzöffnung austretende Waschstrahl einen sichelförmigen Querschnitt aufweist und rotiert.

### Vorteile der Erfindung

Die erfindungsgemäße Spritzdüse mit den Merkmalen des Anspruchs 1 hat den Vorteil, daß der Waschstrahl sich nicht auf einer vorgegebenen, nur zufällig veränderbaren Bahn bewegt, sondern gezielt auf eine gewünschte Stelle innerhalb der zu reinigenden Scheibe gelenkt werden kann. Dadurch kann auch eine durch den Fahrtwind beeinflußte Strahlrichtung des Waschstrahls kompensiert werden. Bei nachlassendem Waschwasserstrom oder Waschwasserdruck kann ebenfalls eine Kompensation der sich dadurch verändernden Strahlrichtung des Waschstrahls erreicht werden, indem der Waschstrahl durch die Strahlleitzunge höher ausgelenkt wird. Darüber hinaus ist auch ein gezieltes Benetzen und/oder Säubern einer großen Scheibenfläche durch den Fahrer oder durch ein Steuergerät, das verschiedene "Waschprogramme" vorhält, möglich.

Bei thermoelektrischer Verformung der Strahlleitzunge ergibt sich infolge des über die beheizte Strahlleitzunge fließenden Waschstrahls ein stationäres Gleichgewicht zwischen zugeführter elektrischer Energie und vom Waschstrahl abgeführter Wärmeleistung. Letztere bestimmt in Verbindung mit dem Waschwasserdurchsatz die Temperaturdifferenz zwischen Waschwasser und Strahlleitzunge und damit deren Ausbiegung, so daß die Auslenkung des Waschstrahls direkt durch die elektrische Beheizung manipuliert werden kann. Die Beheizung der Strahlleitzunge hat den zusätzlichen Vorteil, daß die Spritzdüse automatisch entfrostet ist und weitere Entfrostungseinrichtungen entfallen können.

Durch die in den weiteren Ansprüchen aufgeführten Maßnahmen sind vorteilhafte Weiterbildungen und Verbesserungen der im Anspruch 1 angegebenen Spritzdüse möglich.

In einer bevorzugten Ausführungsform der Erfindung wird die Spritzdüse als Mehrschichtstruktur mit bekannten Fertigungstechnologien hergestellt, wobei das Düsengehäuse von zwei äußeren Wafern und die Strahlleitzunge von einem dazwischenliegenden mittleren Wafer gebildet ist.

In einer vorteilhaften Ausführungsform der Erfindung ist die Strahlleitzunge als langgestrecktes Thermoelement aus mindestens zwei in Längsrichtung fest aneinanderliegenden Teilzungen aus Werkstoffen mit unterschiedlichen Wärmeausdehnungskoeffizienten ausgebildet, die zwischen sich eine Heizwiderstandsschicht einschließen. Die Ausbildung der Strahlleitzunge auch als Memoryelement ist möglich. Bei Verwendung von Piezomaterial wird dieses flächig auf eine Trägerschicht aufgetragen.

Eine Auslenkung der Strahlleitzunge in zwei unterschiedlichen Richtungen erhält man, wenn gemäß einer weiteren Ausführungsform der Erfindung die Strahlleitzunge aus drei in Längsrichtung fest aneinanderliegenden Schichten zusammengesetzt ist, von denen die beiden äußeren Schichten elektrisch ansteuerbar sind.

In einer zweckmäßigen Ausführungsform der Erfindung ist in der Strahlleitzunge ein Temperatursensor angeordnet und mit dem Temperatursensor ein Überhitzungsschutz verbunden. Letzterer unterbricht die Stromzufuhr zu der Strahlleitzunge bei Überschreiten einer Vorgabetemperatur.

Gemäß einer weiteren Ausführungsform der Erfindung wird der an der Strahlleitzunge angeordnete Temperatursensor mit einer Regelschaltung verbunden, die in der Strahlleitzunge eine Temperatur einregelt, die eine der gewünschten Auslenkung des Waschstrahls entsprechende Verformung der Strahlleitzunge bewirkt. Durch diese schaltungstechnischen Maßnahmen wird der Vorteil erreicht, daß der Einfluß einer variablen, von der Umgebung abhängigen Vorlauftemperatur kompensiert werden kann.

Die erfindungsgemäße Strahlleitzunge selbst kann als mikromechanisches Bauelement ausgeführt werden. Ihre Integration in das Düsengehäuse kann mikromechanisch oder konventionell feinmechanisch ausgeführt werden.

### Zeichnung

Die Erfindung ist anhand eines in der Zeichnung dargestellten Ausführungsbeispiels in der nachfolgenden Beschreibung näher erläutert. Es zeigen:
- Fig. 1: ausschnittweise einen schematischen Längsschnitt einer Spritzdüse in Verbindung mit einer Regelschaltung für die Auslenkung des Waschstrahls.
- Fig. 2: ausschnittweise einen Längsschnitt einer Spritzdüse gemäß einem weiteren Ausführungsbeispiel in schematischer Darstellung.

### Beschreibung des Ausführungsbeispiels

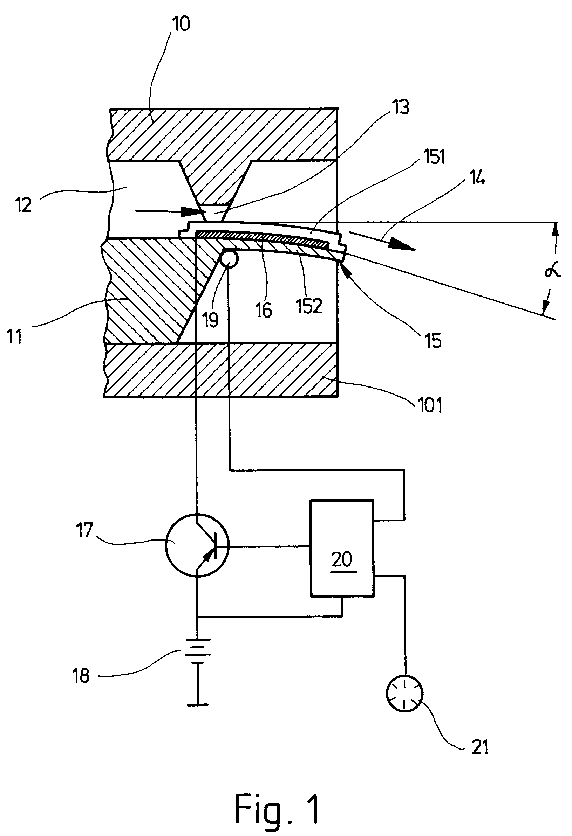

Die in Fig. 1 im Längsschnitt ausschnittweise und nur schematisch skizzierte Spritzdüse für die Scheibenwaschanlage eines Fahrzeugs, z.B. für die Frontscheibe oder Heckscheibe, aber auch für die Abdeckgläser der Scheinwerfer, weist ein Düsengehäuse 10 auf, in welcher ein Düsenkörper 11 eingesetzt ist, der zusammen mit einem Düsengehäuse 10 eine Druckkammer 12 begrenzt. Die Druckkammer 12 steht einerseits mit einem hier nicht dargestellten Druckwasserzulauf, der an eine Waschwasserpumpe angeschlossen, ist und andererseits mit einer Spritzöffnung 13 zum Erzeugen eines Waschstrahls in Verbindung. Ein Waschstrahl ist in der Zeichnung mit Pfeil 14 symbolisiert. Die Spritzöffnung 13 ist dabei zurückverlagert im Innern des Düsengehäuses 10 angeordnet, so daß das Düsengehäuse 10 die Spritzöffnung 13 mit einem über diese hinaus vorgezogenen Ringsteg 101 umgibt. Die Strahlleitzunge 15 ist langgestreckt so ausgebildet, daß der aus der Spritzöffnung 13 austretende Waschstrahl 14 an ihr entlanggeführt wird. Die Strahlleitzunge 15 ist dabei in ihrer Längserstreckung thermo- oder piezoelektrisch derart verformbar, daß der Waschstrahl 14 je nach Ausbiegung der Strahlleitzunge 15 um einen gewünschten Betrag eines spitzen Winkels aus der Achse der Spritzöffnung 13 ausgelenkt wird. In Fig. 1 ist die Strahlleitzunge 15 als langgestrecktes Thermoelement ausgebildet und umfaßt zwei in Längsrichtung fest aufeinanderliegende Teilzungen 151,152 aus Werkstoffen mit unterschiedlichen Wärmeausdehnungskoeffizienten und eine zwischen den Teilzungen 151,152 eingeschlossene Heizwiderstandsschicht 16. Die Teilzunge 152 ist dabei einstückig mit dem Düsenkörper 11 ausgebildet und von diesem aus langgestreckt bis zum Ende des Düsengehäuses 10 geführt. Die andere Teilzunge 151 überdeckt die Teilzunge 152 und die Heizwiderstandsschicht 16 und ist bis in die Druckkammer 12 hineingeführt und dort auch mit dem Düsenkörper 11 fest verbunden. Sie begrenzt zusammen mit dem Düsengehäuse 10 die Spritzöffnung 13. Die Heizwiderstandsschicht 16 ist über einen elektronisch gesteuerten Schalter 17, der hier als Leistungstransistor dargestellt ist, mit der Fahrzeugbatterie 18 elektrisch verbunden. An der Strahlleitzunge 15 ist außerdem ein Thermosensor oder Thermofühler 19 angeordnet, der mit dem einen Eingang einer Regelschaltung 20 verbunden ist. An dem anderen Eingang der Regelschaltung 20 ist ein Sollwertsteller 21 angeschlossen, an dem von Hand eine gewünschte Strahlrichtung des Waschstrahls 14 eingestellt werden kann. Der Ausgang der Regelschaltung 20 ist mit dem Steuereingang des elektronischen Schalters 17 verbunden. Mit Hilfe des Thermofühlers 19 regelt die Regelschaltung 20 die Heizleistung für die Heizwiderstandsschicht 16 so ein, daß die Strahlleitzunge 15 auf eine Temperatur gebracht wird, die eine der gewünschten Auslenkung des Waschstrahls 14 entsprechende Verformung der Strahlleitzunge 15 bewirkt. Auf diese Weise kann entsprechend der Einstellung des Sollwertstellers 21 der Waschstrahl 14 in jede beliebige Strahlrichtung innerhalb des in der Zeichnung mit α gekennzeichneten Waschstrahlwinkels eingestellt werden. Wird in der Regelschaltung 20 oder in einem damit verbundenen Steuergerät Software für vorgegebene "Waschprogramme" vorgehalten, so wird nach Anwahl eines solchen Waschprogramms die Scheibe nach einer vorbestimmten Routine, die sich für einen bestimmten Schmutzzustand der Scheibe als optimal erwiesen hat, gezielt benetzt und gesäubert.

Zusätzlich kann noch ein Überhitzungsschutz vorgesehen werden, der die Stromzufuhr zur Heizwiderstandsschicht 16 unterbricht, wenn der Thermofühler 19 eine Temperatur in der Strahlleitzunge 15 meldet, die eine Vorgabetemperatur überschreitet.

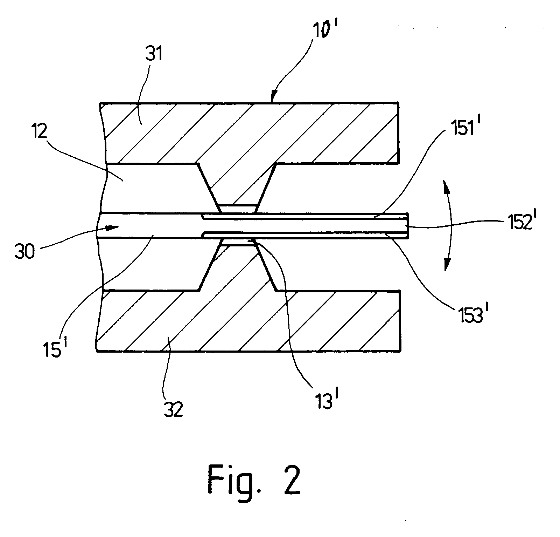

Fig. 2 zeigt einen stark vergrößerten schematischen Längsschnitt durch eine Spritzdüse für eine Scheibenwaschanlage gemäß einem weiteren Ausführungsbeispiel. Die Spritzdüse ist hier in Mehrschichtenstruktur ausgeführt, wobei die einzelnen Schichten aus unterschiedlichen Materialien aufgebaut sind. Für die Herstellung dieser Mehrschichtenstruktur werden Fertigungstechnologien verwendet, wie sie an sich in der Halbleitertechnologie bekannt sind, insbesondere unter dem Namen Silizium-Technologie, Dünnschicht-Technologie oder Dickschicht-Technologie. Diese Technologien zur Herstellung von bestimmten dreidimensionalen Formen in einer Mehrschichtenstruktur und deren Möglichkeit, durch Strukturdetails bestimmter mechanischer Elemente herauszubilden, werden als bekannt vorausgesetzt.

Die Spritzdüse weist im wesentlichen ein Düsengehäuse 10' mit einer ersten Abdeckung 31, einem strukturierten Wafer 30 sowie einer zweiten Abdeckung 32 auf. Bei dem Wafer 30 kann es sich beispielsweise um einen Silizium-Wafer handeln, gegen den die erste und zweite Abdeckung 31 und 32, die z.B. Silizium-Wafer oder Glas-Wafer sein können, gebondet sind. Aufgrund der Strukturierung des Wafers 30 befindet sich zwischen der ersten Abdeckung 31 und der zweiten Abdeckung 32 die Druckkammer 12 der Spritzdüse, die an einem Ende mit einem hier nicht zu sehenden Zulauf in Verbindung steht, und am anderen Ende in der Spritzöffnung 13 mündet. Die beiden Abdeckungen 31,32 sind damit dem Düsengehäuse 10 in Fig. 1 vergleichbar, das die Druckkammer 12 mit Spritzöffnung 13 und Zulauf umschließt, wobei die Spritzöffnung 13 mittig zur Druckkammer 12 angeordnet ist. Der strukturierte Wafer 30 bildet die Biege- oder Strahlleitzunge 15', die durch die Spritzöffnung 13 koaxial hindurchtritt und geringfügig über das Ende der beiden Abdeckungen 31,32 hinaus vorsteht, die in gleicher Weise wie beim Düsengehäuse 10 in Fig. 1 stegartig über die Spritzöffnung 13 hinaus nach vorn vorgezogen sind. Die Strahlleitzunge 15' ist in drei Schichten 151',152' und 153' aufgebaut. Die beiden äußeren Schichten 151' und 153' sind elektrisch aktivierbare Schichten, z.B. piezoelektrisch oder thermoelektrisch, die mittlere Schicht 152' ist nicht elektrisch ansteuerbar. Die Ansteuerung einer der beiden äußeren Schichten 151' oder 152' führt zu einer Längenänderung der entsprechenden Schicht und dadurch zu einer Verbiegung der Strahlleitzunge 15' in eine der beiden durch den Doppelpfeil in Fig. 2 symbolisierten Richtungen, so daß der aus der Spritzöffnung 13 austretende und auf beiden Seiten der Strahlleitzunge 15' entlangströmende Waschstrahl nach oben oder unten in einer der beiden durch den Doppelpfeil angedeuteten Richtungen abgelenkt werden kann. Die Einstellung der Strahlleitzunge 15' kann dabei stationär erfolgen, doch ist auch eine dynamische Einstellung möglich, bei welcher die Strahlleitzunge 15' eine "scannende" Bewegung ausführt.

## Patentansprüche

1. Spritzdüse für Scheibenwaschanlagen von Fahrzeugen mit einer in einem Düsengehäuse aufgenommenen Druckkammer mit Druckwasserzulauf und Spritzöffnung zum Generieren eines Waschstrahls, dadurch gekennzeichnet, daß von der Spritzöffnung (13,13') ausgehend sich eine Strahlleitzunge (15; 15') in Austrittsrichtung des Waschstrahls (14) erstreckt, die in ihrer Längserstreckung durch elektrische Ansteuerung thermo- oder piezoelektrisch derart verformbar ist, daß der nach Austritt aus der Spritzöffnung (13;13') an ihr entlanggeführte Waschstrahl (14) um vorgebbare Beträge eines spitzen Winkels (α) aus der Spritzöffnungsachse ausgelenkt wird.

2. Spritzdüse nach Anspruch 1, dadurch gekennzeichnet, daß die Strahlleitzunge (15) die Spritzöffnung (13) an einer Seite begrenzt.

3. Spritzdüse nach Anspruch 1, dadurch gekennzeichnet, daß die Strahlleitzunge (15') koaxial durch die Spritzöffnung (13') hindurchtritt.

4. Spritzdüse nach einem der Ansprüche 1 - 3, dadurch gekennzeichnet, daß die Strahlleitzunge (15') drei in Längsrichtung fest aneinanderliegenden Schichten (151',152',153') aufweist, von denen die beiden äußeren Schichten (151',153') elektrisch ansteuerbar sind.

5. Spritzdüse nach einem der Ansprüche 1 - 3, dadurch gekennzeichnet, daß die Strahlleitzunge (15) als langgestrecktes Thermoelement aus mindestens zwei in Längsrichtung fest aneinanderliegenden Teilzungen (151,152) aus Werkstoffen mit unterschiedlichen Wärmeausdehnungskoeffizienten und einer zwischen den Teilzungen (151,152) eingeschlossenen Heizwiderstandsschicht (16) ausgebildet ist.

6. Spritzdüse nach Anspruch 5, dadurch gekennzeichnet, daß die eine Teilzunge (152) an einem Düsenkörper (11) mit diesem einstückig ausgebildet ist und daß der in das Düsengehäuse (10) eingesetzte Düsenkörper (11) zusammen mit diesem die Druckkammer (12) begrenzt.

7. Spritzdüse nach Anspruch 6, dadurch gekennzeichnet, daß die andere Teilzunge (151) sich bis auf einen Teil des Düsenkörpers (11) erstreckt und mit diesem verbunden ist und zusammen mit dem Düsengehäuse (10) die Spritzöffnung (13) begrenzt.

8. Spritzdüse nach einem der Ansprüche 5 - 7, dadurch gekennzeichnet, daß an oder in der Strahlleitzunge (15) ein Temperatursensor (18) angeordnet ist und daß mit dem Temperatursensor (19) eine Regelschaltung (20) verbunden ist, die in der Strahlleitzunge (15) eine Temperatur ausregelt, die eine der gewünschten Auslenkung des Waschstrahls (14) entsprechende Verformung der Strahlleitzunge (15) bewirkt.

9. Spritzdüse nach einem der Ansprüche 1 - 5, gekennzeichnet durch ihre Herstellung in Mehrschichtstruktur, wobei das Düsengehäuse (10') von zwei äußeren Wafern (31,32) und die Strahlleitzunge (15') von einem dazwischenliegenden mittleren Wafer (30) gebildet ist.

10. Spritzdüse nach einem der Ansprüche 1 - 9, dadurch gekennzeichnet, daß das Düsengehäuse (10;10') stegartig über die Spritzöffnung (13;13') bis etwa zum Ende der Strahlleitzunge (15;15') vorgezogen ist.

11. Spritzdüse nach einem der Ansprüche 1 - 10, dadurch gekennzeichnet, daß an oder in der Strahlleitzunge (15) ein Temperatursensor (19) angeordnet ist und daß mit dem Temperatursensor (19) ein Überhitzungsschutz verbunden ist, der die Stromzufuhr zu der Strahlleitzunge (15) bei Überschreiten einer Vorgabetemperatur unterbindet.

12. Spritzdüse nach einem der Ansprüche 1 - 11, dadurch gekennzeichnet, daß die elektrische Ansteuerung der Strahlleitzunge (15;15') mittels einer vorgegebenen Steuerroutine ("Waschprogramm") durchgeführt wird.

## Claims

1. Spray nozzle for washer systems of vehicles with a pressure chamber which is accommodated in a nozzle housing and has a pressurized water feed and spray aperture for generating a washing jet, characterized in that starting from the spray aperture (13, 13') a jet-guiding tongue (15; 15') extends in the outlet direction of the washing jet (14), which tongue can be deformed in its longitudinal extent thermoelectrically or piezo-electrically, by means of electrical actuation, in such a manner that the washing jet (14), which is guided along it after exiting from the spray aperture (13; 13'), is deflected by predeterminable values of an acute angle (α) from the spray-aperture axis.

2. Spray nozzle according to Claim 1, characterized in that the jet-guiding tongue (15) bounds the spray aperture (13) on one side.

3. Spray nozzle according to Claim 1, characterized in that the jet-guiding tongue (15') passes coaxially through the spray aperture (13').

4. Spray nozzle according to one of Claims 1-3, characterized in that the jet-guiding tongue (15') has three layers (151', 152', 153') which bear fixedly against one another in the longitudinal direction and the two outer layers (151', 153') of which can be actuated electrically.

5. Spray nozzle according to one of Claims 1-3, characterized in that the jet-guiding tongue (15) is designed as an elongate thermocouple comprising at least two sub-tongues (151, 152) which bear fixedly against one another in the longitudinal direction and are made of materials having different coefficients of thermal expansion, and a heating resistor layer (16) enclosed between the sub-tongues (151, 152).

6. Spray nozzle according to Claim 5, characterized in that one sub-tongue (152) on a nozzle body (11) is of integral design with the latter, and in that the nozzle body (11), which is inserted into the nozzle housing (10), bounds the pressure chamber (12) together with said housing.

7. Spray nozzle according to Claim 6, characterized in that the other sub-tongue (151) extends up to part of the nozzle body (11) and is connected thereto and together with the nozzle housing (10) bounds the spray aperture (13).

8. Spray nozzle according to one of Claims 5-7, characterized in that a temperature sensor (18) is arranged on or in the jet-guiding tongue (15), and in that connected to the temperature sensor (19) is a control circuit (20) which adjusts the temperature in the jet-guiding tongue (15) to one which effects a deformation of the jet-guiding tongue (15) corresponding to the desired deflection of the washing jet (14).

9. Spray nozzle according to one of Claims 1-5, characterized by its production in a multi-layer structure, the nozzle housing (10') being formed by two outer wafers (31, 32) and the jet-guiding tongue (15') being formed by a central wafer (30) lying in between.

10. Spray nozzle according to one of Claims 1-9, characterized in that the nozzle housing (10; 10') is pulled forward in a web-like manner over the spray aperture (13; 13') approximately as far as the end of the jet-guiding tongue (15; 15').

11. Spray nozzle according to one of Claims 1-10, characterized in that a temperature sensor (19) is arranged on or in the jet-guiding tongue (15), and in that connected to the temperature sensor (19) is an overheating safeguard which stops the current feed to the jet-guiding tongue (15) when a preset temperature is exceeded.

12. Spray nozzle according to one of Claims 1-11, characterized in that the electrical actuation of the jet-guiding tongue (15; 15') is carried out by means of a predetermined control routine ("washing programme").

## Revendications

1. Buse d'injection pour des installations de lave-glaces de véhicules avec une chambre de pression logée dans un boîtier de buse avec une amenée d'eau sous pression et un orifice d'injection pour générer un jet d'eau, caractérisée en ce que partant de l'orifice d'injection (13, 13') s'étend une languette de guidage de jet (15 ; 15') en direction de la sortie du jet de lavage (14), languette qui peut être déformée dans son étendue longitudinale par une excitation électrique thermo ou piézoélectrique de manière que le jet de lavage (14) guidé le long de la languette après sa sortie de l'orifice d'injection (13 ; 13') est dévié de valeurs prédéfinies d'un angle aigu (α) à partir de l'axe de l'orifice d'injection.

2. Buse d'injection selon la revendication 1, caractérisée en ce que la languette de guidage de jet (15) délimite sur un côté l'orifice d'injection (13).

3. Buse d'injection selon la revendication 1, caractérisée en ce que la languette de guidage de jet (15') traverse coaxialement l'orifice d'injection (13').

4. Buse d'injection selon une des revendications 1-3, caractérisée en ce que la languette de guidage de jet (15') comporte dans le sens longitudinal des couches (151', 152', 153') situées de manière fixe l'une sur l'autre, parmi lesquelles les deux couches extérieures (151', 153') sont excitables électriquement.

5. Buse d'injection selon une des revendications 1-3, caractérisée en ce que la languette de guidage de jet (5) est réalisée comme un thermoélément allongé compose d'au moins deux languettes partielles (151, 152) situées fixement l'une sur l'autre dans le sens longitudinal, constitué de matériaux ayant des coefficients de dilatation thermique différents et d'une couche de résistance chauffante (16) incluse entre les languettes partielles (151, 152).

6. Buse d'injection selon la revendication 5, caractérisée en ce que l'une des languettes partielles (152) est réalisée sur un corps de buse (11) en formant une seule pièce avec celui-ci et en ce que le corps de buse (11) inséré dans le boîtier de buse (10) délimite avec celui-ci la chambre de pression (12).

7. Buse d'injection selon la revendication 6, caractérisée en ce que l'autre languette partielle (151) s'étend jusque sur une partie du corps de buse (11) et est liée à celui-ci et délimite en commun avec le boîtier de buse (10) l'orifice d'injection (13).

8. Buse d'injection selon une des revendications 5 à 7, caractérisée en ce que sur ou dans la languette de guidage de jet (15) est placé un capteur de température (18) et en ce qu'un montage de régulation (20) est connecté dans le capteur de température (19), montage qui règle une déformation de la languette de guidage de jet (15) correspondant à la déviation désirée du jet de lavage (14).

9. Buse d'injection selon une des revendications 1-5, caractérisée par sa fabrication en structure à plusieurs couches, tandis que le boîtier de buse (10') est formé de deux tranches extérieures (31, 32) et la languette de guidage de jet (15') d'une tranche centrale (30) se situant entre elles.

10. Buse d'injection selon une des revendications 1-9, caractérisée en ce que le boîtier de buse (10 ; 10') s'avance en avant à la manière d'une nervure au dessus de l'orifice d'injection (13 ; 13') jusqu'à l'extrémité de la languette de guidage de jet (15 ; 15').

11. Buse d'injection selon une des revendications 1-10, caractérisée en ce que sur ou dans la languette de guidage de jet (15) est placé un capteur de température (19) et en ce qu'au capteur de température (19) est connectée une protection de surchauffe, qui interrompt l'alimentation en courant électrique à la languette de guidage de jet (15) lors d'un déplacement d'une température donnée.

12. Buse d'injection selon une des revendications 1-11, caractérisée en ce que l'excitation électrique de la languette de guidage de jet (15; 15') est réalisée au moyen d'une routine de commande ("programme de lavage")
